# EUROPEAN PATENT APPLICATION

(11) **EP 2 876 088 A1**
(43) Date of publication of application: **27.05.2015**
(21) Application number: 13820298.1
(22) Date of filing: 19.07.2013
(51) Int. Cl.: C02F 1/28, B01F 5/00, B01F 7/16, B01F 7/22, B01F 11/00, C02F 1/44, B01F 5/06, B01F 13/00, B01F 15/00, B01F 1/00, C02F 1/00, C02F 1/42

(54) **WATER PURIFIER**

(30) Priority: 19.07.2012 JP 2012160758
(71) Applicant: Mitsubishi Rayon Co., Ltd., Tokyo 100-8253 (JP)
(72) Inventor: HATTORI Kyoko, Tokyo 100-8253 (JP); KATO Tatsuhiro, Toyohashi-shi Aichi 440-8601 (JP); TAKEDA Hatsumi, Toyohashi-shi Aichi 440-8601 (JP)
(74) Representative: Hoffmann Eitle
(86) International application number: PCT/JP2013/069657
(87) International publication number: WO 2014/014088

(57) **Abstract**

To provide a pot type water purifier capable of obtaining a mixed liquid including purified water and an additive uniformly mixed in the purified water without the need of stirring and the like in a container such as a cup after pouring out. The pot type water purifier of the present invention includes: a body container 6 with internal space 2 and an upper opening 4; a raw water reservoir 12 provided to an upper part of the internal space; a water purification cartridge 14 communicating with the raw water reservoir; a purified water reservoir 16 formed below the water purification cartridge, the purified water reservoir housing purified water resulting from filtration through the water purification cartridge; a pouring lip 24 for purified water in the purified water reservoir; and stirring means 28 provided to the body container to stir the purified water.

## Description

### TECHNICAL FIELD

The present invention briefly relates to a water purifier. More specifically, the present invention relates to what is called a pot type water purifier that purifies raw water in a raw water reservoir with a purifying cartridge to make purified water (filtered water) and houses the purified water in a purified water reservoir in a lower part.

### BACKGROUND ART

Such a pot type water purifier includes one with a structure that allows addition of an additive in order to give flavor, physical properties, functionality and the like to filtered water (purified water). Examples of an additive to be added for giving flavor or physical properties include flavoring such as (liquid or powder) sources for potable water, tea leaves, spices, and ice. Examples of an additive to be added for giving functionality include spices, herbs, and supplements.

Patent Document 1 discloses a water purifier known as an example of this pot type water purifier. The water purifier of Patent Document 1 includes a storage area for potable liquid (liquid where an additive is mixed) within a partial area of the water purifier. During pouring out, potable liquid in this storage area is mixed into purified water (purified water) flowing in a discharge path for the purified water, thereby supplying the purified water with the additive (mixed liquid).

Patent Document 1: Japanese Unexamined Patent Application, Publication No. 2005-329276

### DISCLOSURE OF THE INVENTION

### Problems to be Solved by the Invention

According to the structure of the aforementioned water purifier of Patent Document 1, however, since an additive is mixed into purified water in the discharge path for the purified water, the additive is not mixed uniformly in the mixed liquid while the mixed liquid is poured out of the water purifier into a container.

This causes a bothersome issue as work such as stirring of the mixed liquid in the container such as a cup becomes necessary for obtaining a uniformly mixed liquid.

The present invention has been made to cope with the aforementioned problem. An object of the present invention is to provide a pot type water purifier capable of obtaining a mixed liquid including purified water and an additive uniformly mixed in the purified water without the need of stirring and the like in a container such as a cup after pouring out.

### Means for Solving the Problems

The present invention provides a pot type water purifier including: a body container with internal space and an upper opening; a raw water reservoir provided to an upper part of the internal space; a water purification cartridge communicating with the raw water reservoir; a purified water reservoir formed below the water purification cartridge, the purified water reservoir housing purified water resulting from filtration through the water purification cartridge; a pouring lip for purified water in the purified water reservoir; and stirring means provided to the body container to stir the purified water.

In this structure,
as a result of provision of the stirring means to stir purified water in the water purifier, an additive added into the purified water reservoir is uniformly mixed with purified water in the water purifier.

According to another preferred aspect of the present invention, the stirring means is provided between the purified water reservoir and the pouring lip.

In this structure, an additive added into the purified water reservoir is uniformly mixed with purified water while the purified water is poured out of the water purifier.

According to another preferred aspect of the present invention, the stirring means is formed of an in-line mixer reduced in cross-sectional area from the purified water reservoir toward the pouring lip.

According to another preferred aspect of the present invention, the stirring means is provided in the purified water reservoir.

In this structure, an additive added into the purified water reservoir is uniformly mixed with purified water in the purified water reservoir.

According to another preferred aspect of the present invention, the stirring means includes a rotary impeller.

According to another preferred aspect of the present invention, the stirring means includes a bar member and a stirring plate coupled to a lower end of the bar member.

According to another preferred aspect of the present invention, the bar member is arranged in a position in the purified water reservoir opposite the pouring lip.

This structure facilitates stirring and prevents the bar member from getting out of the way of pouring out of purified water.

According to another preferred aspect of the present invention, an anticollision member is provided that prevents collision of the stirring plate with the water purification cartridge.

This structure can prevent collision of the stirring plate with the water purification cartridge during stirring.

According to another preferred aspect of the present invention,
backflow reducing means is provided below the water purification cartridge.

According to another preferred aspect of the present invention,
the backflow reducing means includes a check valve.

According to another preferred aspect of the present invention,
liquid splash preventing means for a mixed liquid is provided.

According to another preferred aspect of the present invention,
the liquid splash preventing means for a mixed liquid includes a baffle plate.

According to another preferred aspect of the present invention, a baffle plate is provided below the water purification cartridge.

In this structure, purified water where an additive in the purified water reservoir is added, specifically purified water with the additive (mixed liquid) is unlikely to flow into the raw water reservoir. This can suppress reduction in the ability of the water purification cartridge to purify raw water.

According to another preferred aspect of the present invention, adding means is provided that includes a cylindrical additive container and a nozzle provided to one end of the additive container and having an additive supply port. The adding means adds an additive into the purified water reservoir.

In this structure, the additive can be added easily into the purified water reservoir.

According to another preferred aspect of the present invention, a lid is provided that closes the opening such that the opening can be opened and closed freely.

This structure can prevent mixture of dust and the like into the water purifier and spilling out of water to occur when the water purifier is tilted.

### Effects of the Invention

The present invention provides a pot type water purifier capable of obtaining a mixed liquid including purified water and an additive uniformly mixed in the purified water without the need of stirring and the like in a container such as a cup after pouring out.

### BRIEF DESCRIPTION OF THE DRAWINGS

Fig. 1 shows a diagrammatic sectional view illustrating the structure of a water purifier of a first embodiment of the present invention;
Fig. 2 shows the cross-sectional structure of an umbrella valve as an example of a check valve used in the water purifier of the embodiment of Fig. 1;
Fig. 3 shows the cross-sectional structure of a duck bill valve as another example of the check valve used in the water purifier of the embodiment of Fig. 1;
Fig. 4 shows a diagrammatic sectional view illustrating the structure of a modification of the water purifier of the embodiment of Fig. 1;
Fig. 5 shows a diagrammatic sectional view illustrating the structure of a modification of the water purifier of the embodiment of Fig. 1;
Fig. 6 shows a diagrammatic sectional view illustrating the structure of a water purifier of a second embodiment of the present invention;
Fig. 7 shows a diagrammatic sectional view illustrating the structure of a water purifier of a third embodiment of the present invention;
Fig. 8 shows a diagrammatic sectional view illustrating the structure of a water purifier of a fourth embodiment of the present invention;
Fig. 9 shows a diagrammatic sectional view illustrating the structure of a water purifier of a fifth embodiment of the present invention; and
Fig. 10 briefly shows an additive container used in the water purifier of the embodiment of Fig. 9.

### PREFERRED EMBODIMENT FOR CARRYING OUT THE INVENTION

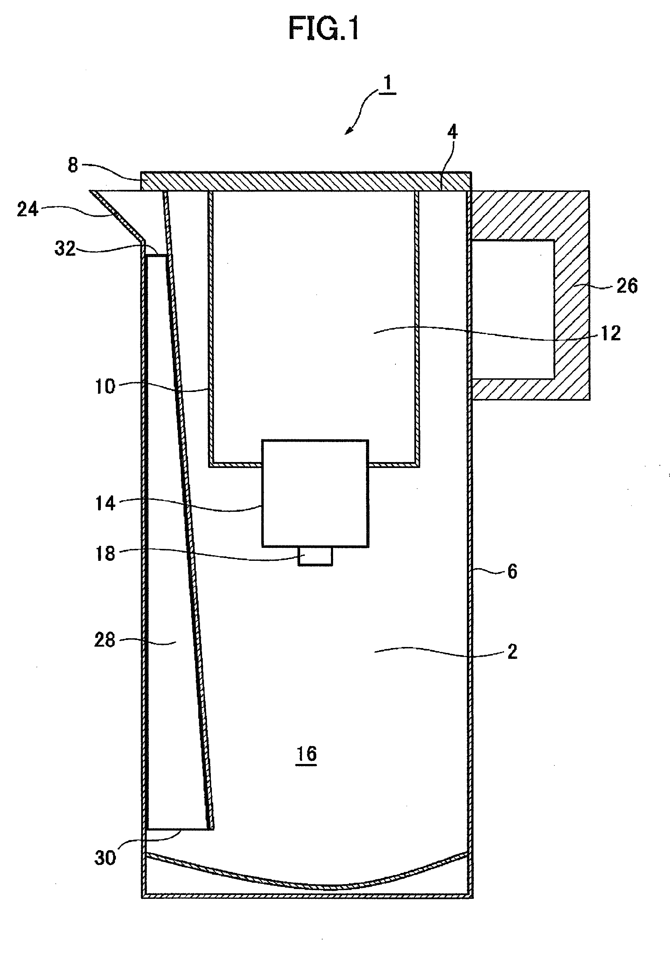

Below, Preferred embodiments of the present invention will be described with reference to the figures. Fig. 1 is a diagrammatic sectional view showing the structure of a pot type water purifier 1 of a first embodiment of the present invention.

The water purifier 1 is what is called a pot type water purifier that purifies raw water in a raw water reservoir with a purifying cartridge to make filtered water (purified water) and houses the purified water in a purified water reservoir in a lower part. The water purifier 1 is used suitably for the purpose of mixing an additive with the purified water to be added for giving flavor or physical properties to the purified water.

As shown in Fig. 1, the water purifier 1 includes a body container 6 of a closed-bottom cylinder with internal space 2 and an upper opening 4. The upper opening 4 of the body container 6 is closed by a lid 8 such that the opening 4 can be opened and closed freely. The lid 8 can prevent mixture of dust and the like into the water purifier and spilling out of water to occur when the water purifier is tilted.

In this embodiment, the bottom of the internal space 2 of the body container 6 has a gently recessed round shape. This structure prevents difficulty in mixing an additive with purified water uniformly to occur due to concentration of the additive in a bottom corner of the internal space 2.

A partition 10 is attached to an upper part of the internal space 2. The partition 10 is a box internal member with an upwardly directed opening. The inside of the partition 10 functions as a raw water reservoir 12 that houses raw water to be filtered. The structure of the partition 10 in the water purifier 1 of this embodiment is such that the partition 10 can be attached to and detached from the inside of the body container 6 freely.

A water purification cartridge 14 communicating with the raw water reservoir 12 is fitted to the lower end of the partition 10. Raw water in the raw water reservoir 12 is filtered through the water purification cartridge 14. A purified water reservoir 16 is formed below the water purification cartridge 14 in the internal space 2. The purified water reservoir 16 houses purified water resulting from filtration through the water purification cartridge 14.

It is preferable that the purified water reservoir 16 have a capacity of 5 L or less, more preferably, 2 L or less in consideration of convenience for carrying and ease of housing into a refrigerator. To avoid a too little quantity of purified water that can be used at one time, it is preferable that the capacity of the purified water reservoir 16 do not fall below 0.5 L.

The water purification cartridge 14 is a publicly known cartridge of a structure same as that of a water purification cartridge conventionally used in a pot type water purifier. The water purification cartridge 14 has an air discharge tube at the upper end not shown in the drawings. A raw water inlet is formed in the outer circumferential side surface of the air discharge tube. An air discharge hole is formed in the top of the air discharge tube.

In the water purification cartridge 14 of this embodiment, at least one of a fibrous filter medium, a granular filter medium, and a membrane is housed as a filter medium inside a cylindrical container to remove residual chlorine, bacteria, or fine particles of iron rust and the like from raw water such as tap water.

The filter medium can for example be housed in the following method: a method of housing one type of filter medium in an individual cylindrical member and combining such filter media into one, and a method of housing filter media of two types or more together in one cylindrical member.

The fibrous filter medium makes the occurrence of an air trap that hinders filtration unlikely. Thus, it is preferable that the fibrous filter medium be arranged downstream relative to the granular filter medium.

Arranging the fibrous filter medium downstream relative to the granular filter medium makes the fibrous filter medium further function as a filter that suppresses flow of fine powder out of the granular filter medium, so that an additional filter to be arranged downstream relative to the granular filter medium becomes unnecessary. Thus, such arrangement is preferred in terms of making the structure of the water purification cartridge simpler and more compact.

To prevent the fibrous filter medium from shifting from its position or falling off during conveyance or filtration, it is preferable that the fibrous filter medium be fixed in the cylindrical container with support members arranged above and below the fibrous filter medium.

Covering at least a part of the circumference of the fibrous filter medium for example with non-woven cloth, a sintered material or nylon mesh maintains the shape of the fibrous filter medium. Thus, the fibrous filter medium can be handled easily, processed easily, and achieve higher effect as a filter. It is preferable that the fibrous filter medium contain ion-exchange fiber.

Examples of the granular filter medium include activated carbon, zeolite, a molecular sieve, coral sand, bone ash, hydroxyapatite, and titanium silicate.

The shape of the activated carbon is not limited. Examples of the activated carbon include powdered carbon, granular carbon, fibrous carbon, crushed carbon, bead carbon, honeycomb carbon, and molded carbon.

A membrane through which fine particles of iron rust and the like or bacteria can be removed may be arranged further downstream relative to the granular filter medium and the fibrous filter medium. Examples of the membrane include a flat membrane, a hollow fiber membrane, and a tubular membrane.

Backflow reducing means is attached downstream relative to the water purification cartridge 14. This suppresses reduction in the ability of the water purification cartridge 14 to purify raw water to occur due to flow of purified water where an additive in the purified water reservoir 16 is added, specifically purified water with the additive (mixed liquid), into the raw water reservoir 12.

Examples of the backflow reducing means include a check valve and liquid splash preventing means for a mixed solution.

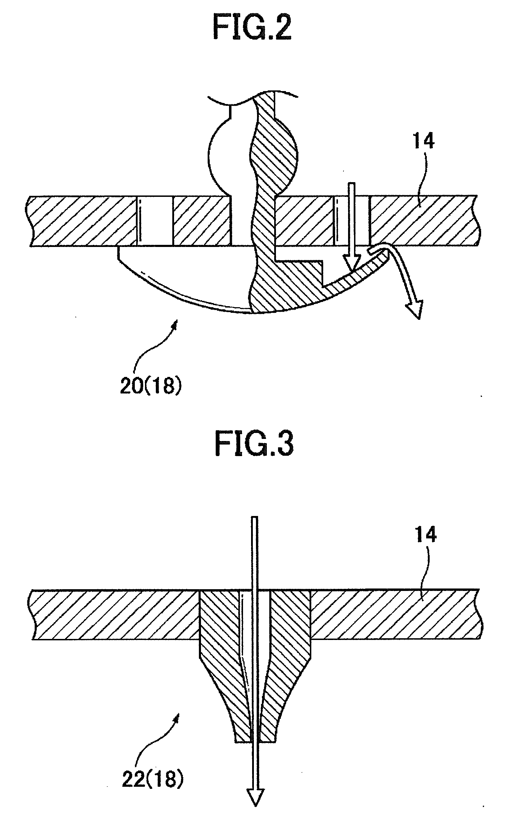

Examples of the check valve include an umbrella valve 20 shown in Fig. 2 and a duck bill valve 22 shown in Fig. 3.

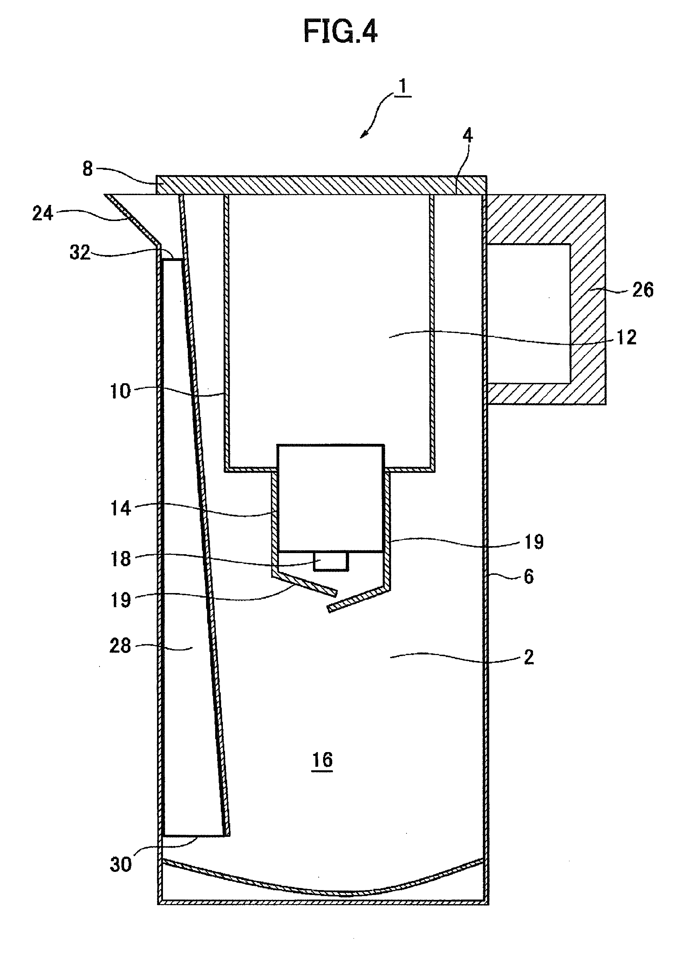

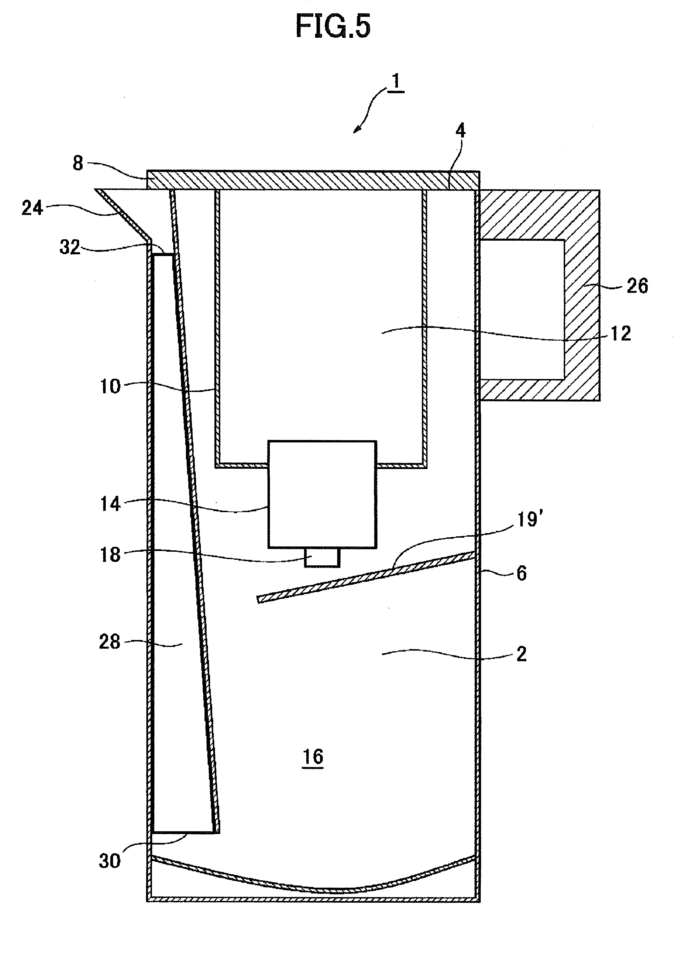

Alternatively, the liquid splash preventing means may have a structure with a baffle plate 19 or 19' shown in Fig. 4 or 5 respectively.

As shown in Figs. 4 and 5, the baffle plates 19 and 19' are spaced below the water purification cartridge 14 by a given distance so as to cover an outlet for purified water in the water purification cartridge 14 from below.

The baffle plates 19 and 19' can prevent liquid in the body container 6 having bounced up toward the water purification cartridge 14 from going into the water purification cartridge 14 directly through the purified water outlet. Such entry of the liquid occurs due to vibration coming from outside or the action of tilting the body container 6, for example.

The baffle plate 19 of Fig. 4 includes one baffle plate covering another baffle plate. Even if a mixed liquid in the purified water reservoir 16 swings in any direction during carrying, the baffle plate 19 still makes flow of the mixed liquid into the water purification cartridge 14 unlikely through the purified water outlet.

The baffle plate 19' of Fig. 5 makes flow of a mixed liquid in the purified water reservoir 16 into the water purification cartridge 14 unlikely while the mixed liquid in the purified water reservoir 16 is poured into a cup and the like through a pouring lip 24. Additionally, a simple structure of the baffle plate 19' facilitates cleaning and achieves excellent maintenance performance.

The pouring lip 24 through which a mixed liquid in the purified water reservoir 16 is poured out is formed at one end of the upper part of the body container 6. A handle 26 is formed at the opposite end.

A material for the body container 6, the lid 8, the partition 10, the backflow reducing means 18 and the like may be resin such as ABS resin, polycarbonate resin, metacrylate resin, polypropylene, polystyrene, MS resin, nylon resin, or poly-4-methyl-pentene-1. Alternatively, the material may be metal such as stainless steel or plated iron. More specifically, the material is selected in consideration of a mechanical strength, a surface appearance, performance of processing a molding, or functionality, for example. It is preferable that a transparent material be used in order to allow check of a content visually from outside. The body container 6 may be given antibiotic properties.

The water purifier 1 of this embodiment further includes an in-line mixer 28 as stirring means that stirs a mixed liquid in the purified water reservoir 16 before the mixed liquid is poured out through the pouring lip 24. In the water purifier 1, the in-line mixer 28 is arranged so as to extend from the bottom of the internal space 26 of the body container 6, specifically from the bottom of the purified water reservoir 16 toward the pouring lip 24. The in-line mixer 28 forms a flow path that lets a mixed liquid flow out through the pouring lip 24 entirely.

In this embodiment, the in-line mixer 28 has a funnel shape reduced in cross-sectional area from a water inlet 30 toward a water outlet 32. The in-line mixer 28 is what is called still mixing means without a driving unit. The in-line mixer 28 includes an element inside for stirring and mixing sequentially. The element has a shape formed for example by twisting a rectangular plate 180 degrees around a center axis line in the longitudinal direction thereof.

This structure increases the flow rate and the mixing efficiency of a liquid to pass through inside the in-line mixer 28, and a flow rate at which a mixed liquid is poured out. As a result, an additive added into the purified water reservoir 16 is uniformly mixed into purified water resulting from filtration through the water purification cartridge 14.

In this embodiment, the body container 6, the lid 8, the partition 10, the water purification cartridge 14, and the stirring means 28 are configured such that they can be attached to and detached from each other.

Next, a method of using the water purifier 1 will be described. First, the lid 8 and the partition 10 are detached from the body container 6. Then, an additive is added into the purified water reservoir 16 of the body container 6.

The additive may be a substance that gives flavor, physical properties, or functionality to filtered water. Examples of an additive to be added for giving flavor or physical properties include flavoring such as (liquid or powder) sources for potable water, tea leaves, spices, and ice. Examples of an additive to be added for giving functionality include spices, herbs, and supplements.

Next, the partition 10 is attached to the body container 6. Raw water such as tap water is poured into the raw water reservoir 12 in the partition 10. Then, the lid 8 is closed.

The raw water poured into the raw water reservoir 12 in the partition 10 flows into the water purification cartridge 14 through the raw water inlet in the outer circumferential side surface of the air discharge tube of the water purification cartridge 14. Then, the raw water is filtered with the filter medium. The raw water thereafter drops down to the purified water reservoir 16 of the body container 6 and housed therein as filtered water, specifically as purified water.

During the filtration, air in the water purification cartridge 14 is discharged to the atmosphere through the air discharge hole. Thus, the raw water in the raw water reservoir 12 drops down to the purified water reservoir 16 at a maximum permeation rate while being free from air resistance. The resultant water is then mixed with the additive added into the purified water reservoir 16 and housed therein.

For purposes such as drinking of the purified water with the additive (mixed liquid), the water purifier 1 is tilted to pour out the mixed liquid in the purified water reservoir 16 into a cup and the like through the pouring lip 24. In doing so, the mixed liquid entirely passes through the flow path formed by the in-line mixer 28. While the mixed liquid passes through the flow path, the in-line mixer 28 acts to facilitate mixture of the additive with the purified water. As a result, the purified water flows out as a mixed liquid where the additive is mixed uniformly.

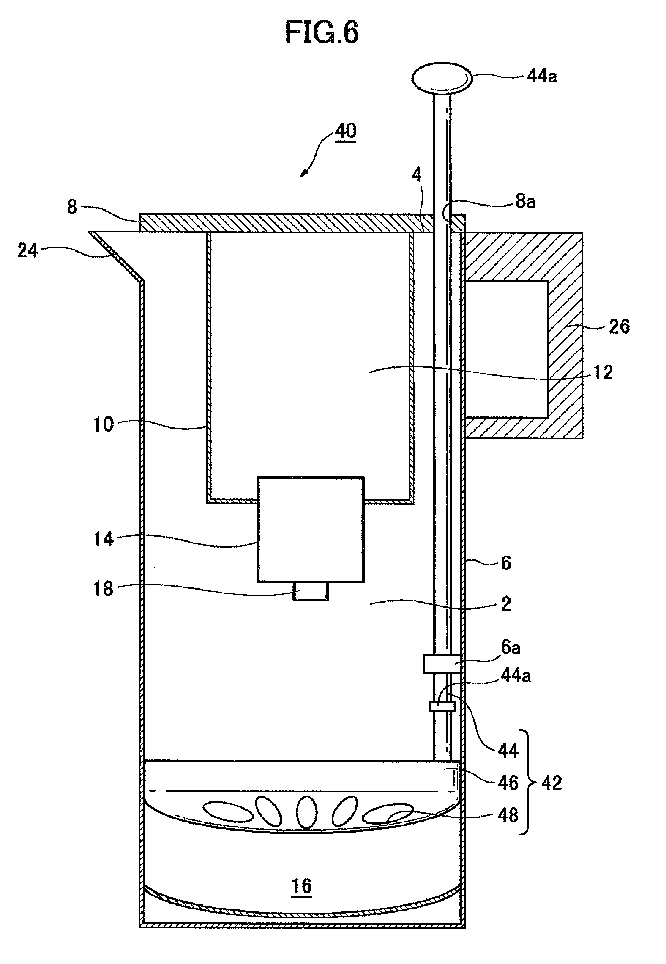

Next, a water purifier of another preferred embodiment of the present invention will be described. Fig. 6 is a diagrammatic sectional view showing the structure of a water purifier 40 of a second embodiment of the present invention. As clearly seen from Fig. 6, the water purifier 40 has a structure same as that of the water purifier 1 of the first embodiment, except the specific structure of the stirring means.

The structure of the water purifier 40 described below is mainly intended for the difference. The water purifier 40 includes a hand-operated stirrer 42 as the stirring means instead of the in-line mixer 28 of the water purifier 1. The hand-operated stirrer 42 includes a bar member 44 penetrating a hole 8a in the lid 8 to reach as far as the vicinity of the bottom of the purified water reservoir 16, and a stirring plate 46 coupled to the lower end of the bar member 44. Multiple openings 48 are formed in the stirring plate 46.

As shown in Fig. 6, it is preferable that the stirring plate 46 have a substantially hemispherical shape with hollow inside and that the bar member 44 have a substantially columnar shape.

In this embodiment, the internal space of the body container 6 has an inner diameter or a width of about 65 to about 310 mm and a depth of about 150 to about 310 mm. It is preferable that the stirring plate 46 have a maximum outer diameter of 100 to 140 mm and that the bar member 44 have a length of 200 to 360 mm.

This structure achieves effective stirring without damage to the body container 6 to be caused by the stirring plate 46. This structure further allows the bar member 44 to be held easily, thereby achieving efficient stirring.

In this structure, before purified water with an additive (mixed liquid) is poured out, an upper end 44a of the bar member 44 is held and the hand-operated stirrer 42 is moved up and down to stir the mixed liquid in the purified water reservoir 16. As a result, the additive added into the purified water reservoir 16 can be mixed uniformly in the purified water. In this condition, the water purifier 40 is tilted to pour out the mixed liquid through the pouring lip 24 including the purified water and the additive uniformly mixed in the purified water.

It is preferable that the bar member 44 be arranged in a position in the purified water reservoir 16 radially opposite the pouring lip 24. This structure facilitates stirring and prevents the bar member from getting out of the way of pouring out of the purified water.

In the second embodiment, the hand-operated stirrer 42 includes the bar member and the stirring plate. Alternatively, the hand-operated stirrer 42 may include only the bar member.

In this embodiment, it is preferable that an anticollision member be provided to prevent collision of the stirring plate 46 with the water purification cartridge 14. As shown in Fig. 6, it is more preferable that both the bar member 44 and the body container 6 be provided with an anticollision member 44a and an anticollision member 6a, respectively.

As an example, the anticollision member 44a belonging to the bar member is a ring of a diameter of 4 to 20 mm fitted to the outer circumference of the bar member 44. The anticollision member 6a belonging to the body container is a rectangular parallelepiped of a width of 22 to 30 mm having an opening that lets the bar member 44 pass therethrough. The anticollision member 6a is attached to the inner wall of the body container 6 such that the anticollision member 44a belonging to the bar member comes below the anticollision member 6a. Examples of a material for the anticollision members 6a and 44a include ABS resin, vinyl chloride resin, polystyrene, and polyolefin such as polyethylene, or polypropylene.

In this structure, if the bar member 44 is raised to some height, the anticollision member 44a belonging to the bar member collides with the anticollision member belonging to the body container. Thus, the bar member 44 will not go higher. This can prevent collision of the stirring plate 46 with the water purification cartridge 14 to occur due to excessive rise of the stirring plate 46 during stirring, for example.

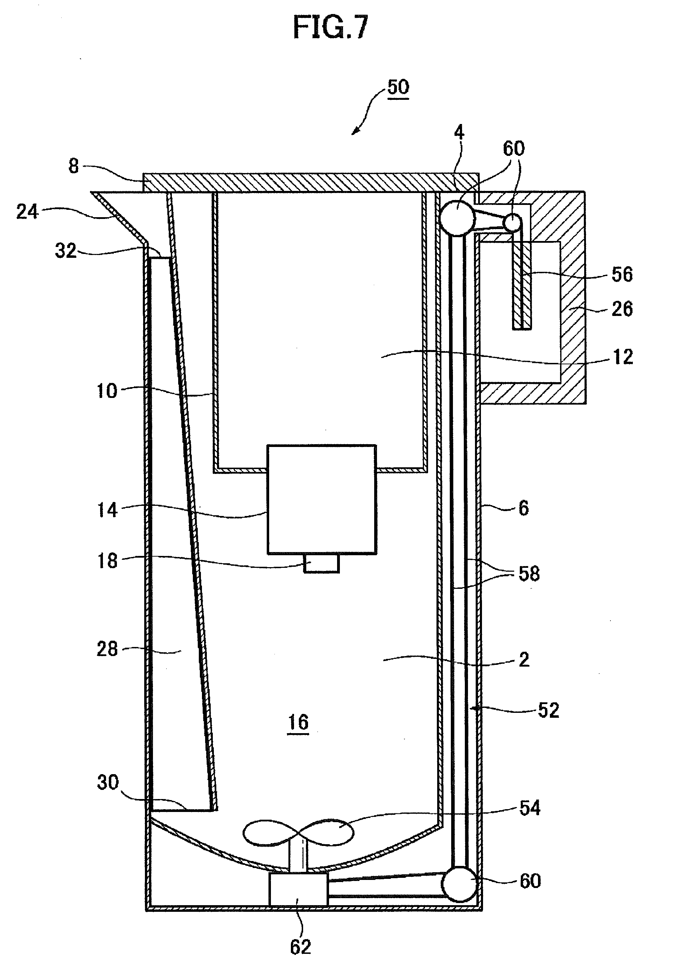

Next, a water purifier of another preferred embodiment of the present invention will be described. Fig. 7 is a diagrammatic sectional view showing the structure of a water purifier 50 of a third embodiment of the present invention. As clearly seen from Fig. 7, the water purifier 50 has a structure same as that of the water purifier 1 of the first embodiment and that of the water purifier 40 of the second embodiment, except the specific structure of the stirring means.

The structure of the water purifier 50 described below is mainly intended for the difference. The water purifier 50 includes the in-line mixer 28 of the water purifier 1 and a hand-operated rotary stirrer 52 as the stirring means. The hand-operated rotary stirrer 52 includes a hand-operated rotary impeller 54 arranged at the center of the bottom surface of the purified water reservoir 16. In this embodiment, the stirring means includes the in-line mixer 28 and the hand-operated rotary stirrer 52. Alternatively, the stirring means may include only the hand-operated rotary stirrer 52.

The hand-operated rotary impeller 54 is rotated by operating a control lever 56 by hand at the back side of the handle 26. The hand-operated rotary impeller 54 is configured so as to stir purified water with an additive (mixed water) in the purified water reservoir 16.

More specifically, in the water purifier 50, an operational wire 58 connecting the rotary impeller 54 and the control lever 56 is routed in the body container 6 through multiple pulleys 60. If the control lever 56 is operated by hand, the operation is transmitted through the operational wire 58 to a rotary driving part 62 of the rotary impeller 54, thereby rotating the hand-operated rotary impeller 54.

In this structure, before or simultaneously with pouring out of a mixed liquid, the control lever 56 is operated to rotate the hand-operated rotary impeller 54. As a result, an additive can be mixed in purified water more uniformly.

The bottom surface of the body container 6 has a gently recessed round shape. Thus, while an additive is mixed with purified water of a small quantity, splash of a mixed liquid is suppressed that is to occur in the purified water reservoir 16 in response to the rotation of the hand-operated rotary impeller 54.

While a mixed liquid in the purified water reservoir 16 is to be poured out into a cup and the like through the pouring lip 24, the mixed liquid entirely passes through the flow path formed by the in-line mixer 28. While the mixed liquid passes through the flow path, the in-line mixer 28 acts to facilitate mixture of an additive with purified water. As a result, the purified water flows out of the water purifier 50 as a mixed liquid where the additive is mixed uniformly.

Providing the control lever 56 at the back side of the handle 26 can prevent erroneous operation to occur during storage and the like due to contact of the control lever 56 with a surrounding object.

The control lever 56 can be operated while the water purifier is raised with one hand. Even if an additive hard to dissolve is used, for example, a mixed liquid including purified water and the additive mixed more uniformly in the purified water can still be obtained by pouring the mixed liquid into a container such as a cup while operating the control lever 56 with one hand.

In the third embodiment, the hand-operated rotary impeller 54 is to be rotated using a control lever to be operated by hand as a power source. Alternatively, the hand-operated rotary impeller 54 may be rotated by a clockwork mechanism or by using non-power driving force such as the repelling force or suction force of magnets or the stretching force of rubber.

Next, a water purifier of another preferred embodiment of the present invention will be described.

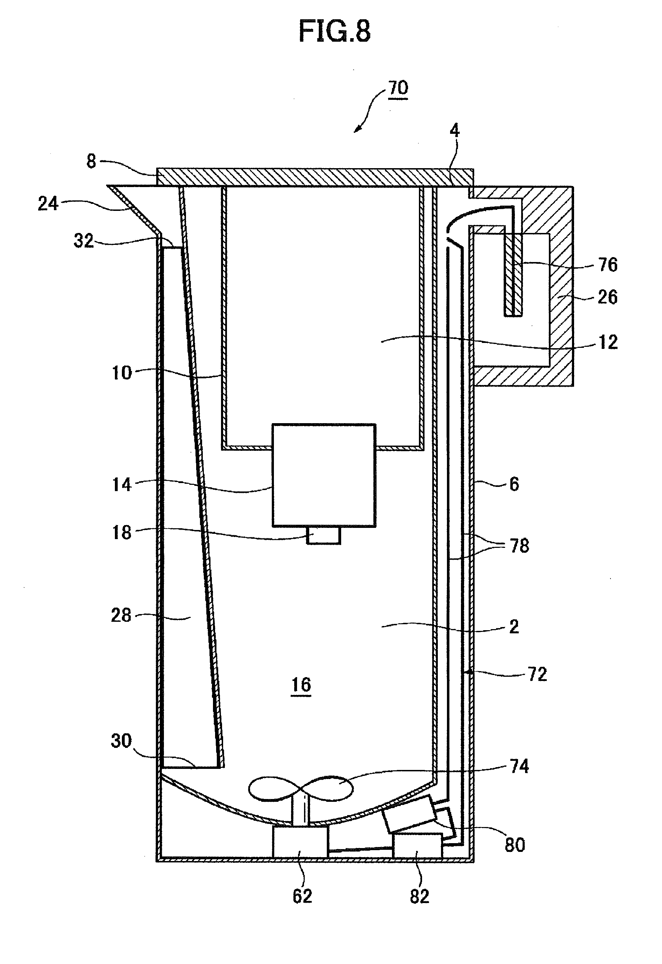

Fig. 8 is a diagrammatic sectional view showing the structure of a water purifier 70 of a fourth embodiment of the present invention. As clearly seen from Fig. 8, the water purifier 70 has a structure same as that of the water purifier 50 of the third embodiment, except a system of rotating a rotary impeller.

The structure of the water purifier 70 described below is mainly intended for the difference. The water purifier 70 includes an electrically-operated rotary stirrer 72 instead of the hand-operated rotary stirrer 52 of the water purifier 50. Like the hand-operated stirrer 52, the electrically-operated rotary stirrer 72 includes an electrically-operated rotary impeller 74 arranged at the center of the bottom surface of the purified water reservoir 16.

More specifically, in the water purifier 70, an electric cable 78 connecting the electrically-operated rotary impeller 74 and a switch 76 is routed in the body container 6. If the switch 76 provided at the back side of the handle 26 is operated, a power source 80 and a driving source 82 built in the body container 6 supply electric power to the rotary driving part 62 of the electrically-operated rotary impeller 74, thereby rotating the electrically-operated rotary impeller 74.

It is preferable that the power source be a portable power source without a power code such as a portable battery or a dry cell. Alternatively, the power source may be a household power source to supply power through an adapter, for example. In this case, electric power is supplied through the electrical wire routed in the body container to the rotary driving part 62 of the electrically-operated rotary impeller 74, thereby rotating the electrically-operated rotary impeller 74.

It is preferable that the switch 76 be a button switch or a lever switch. This allows operation of the switch 76 with a small magnitude of force.

In this structure, before or simultaneously with pouring out of purified water where an additive is mixed, specifically a mixed liquid, the switch 76 is operated to rotate the electrically-operated rotary impeller 74. As a result, the additive can be mixed with the purified water more uniformly.

Using the electrically-operated rotary impeller 74 can obtain a uniformly mixed liquid more efficiently. Thus, even a high-viscosity substance or a substance hard to dissolve can still be mixed promptly and uniformly with purified water.

Providing the switch 76 at the back side of the handle 26 can prevent erroneous operation to occur during storage and the like due to contact of the switch 76 with a surrounding object.

The switch 76 can be operated while the water purifier is raised with one hand. Even if an additive hard to dissolve is used, for example, a mixed liquid including purified water and the additive mixed uniformly in the purified water can still be obtained by pouring the mixed liquid into a container such as a cup while operating the switch 76 with one hand.

While a mixed liquid in the purified water reservoir 16 is to be poured out into a cup and the like through the pouring lip 24, the mixed liquid entirely passes through the flow path formed by the in-line mixer 28. While the mixed liquid passes through the flow path, the in-line mixer 28 acts to facilitate mixture of an additive with purified water. As a result, the purified water flows out of the water purifier 70 as a mixed liquid where the additive is mixed more uniformly.

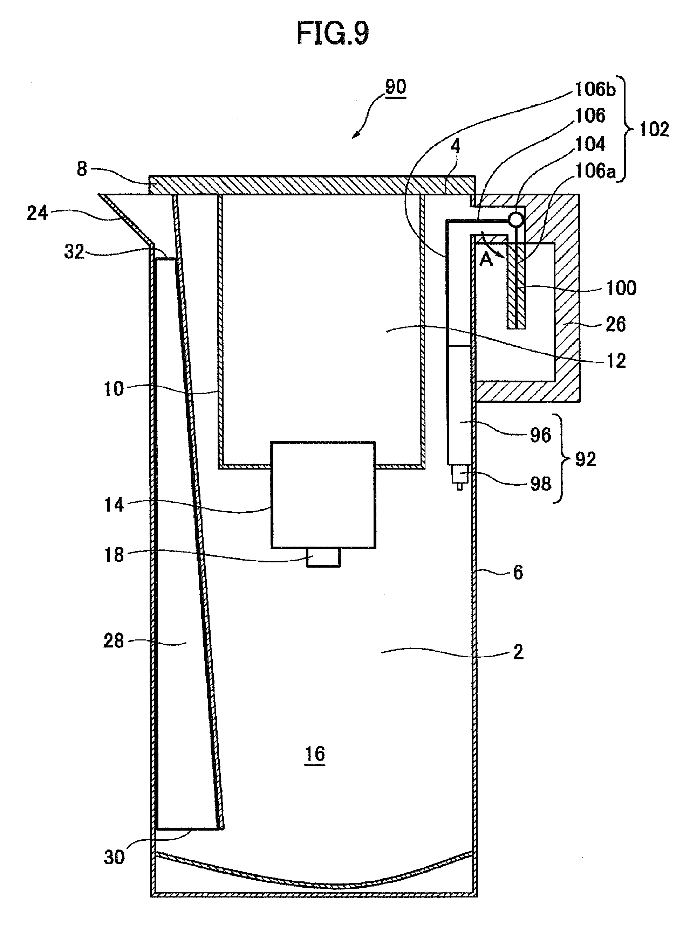

Next, a water purifier of another preferred embodiment of the present invention will be described. Fig. 9 is a diagrammatic sectional view showing the structure of a water purifier 90 of a fifth embodiment of the present invention. As clearly seen from Fig. 9, the water purifier 90 has a structure same as that of the water purifier 1 of the first embodiment.

The structure of the water purifier 90 described below is mainly intended for the difference. The water purifier 90 differs from the water purifier 1 in that it includes adding means that supplies an additive into the purified water reservoir 16.

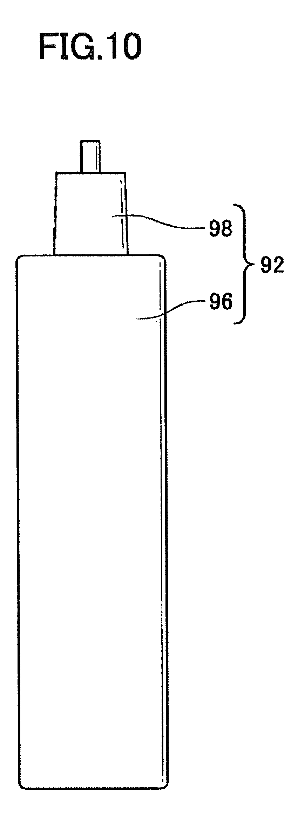

The adding means includes an additive container 92 that houses an additive, and a supply mechanism 94 that supplies an additive of a given quantity from the additive container 92. As shown in Fig. 10, the additive container 92 includes a container body 96 having an open end and housing an additive, and a nozzle 98 attached to the opening part of the container body 96. The container body 96 is made of a hard resin such as polyethylene, polypropylene, or vinyl chloride resin. It is preferable that the container body 96 have a flexible side wall. The nozzle 98 is made of polyethylene, polypropylene, vinyl chloride resin, or ABS resin, for example.

The additive container 92 contains the container body 96 filled with a given additive. With the nozzle 98 pointing downward, the additive container 92 is attached to the inner circumferential surface of the purified water reservoir 16. The nozzle 98 is configured such that the additive in the container body 96 can be discharged through the nozzle 98 if the internal pressure of the container body 96 increases in response, for example, to application of pressure on the side wall of the container body 96 from outside.

The supply mechanism 94 includes a lever 100 provided to the handle 26 and a pressure mechanism 102 that presses the side wall of the container body 96 in response to actuation of the lever 100. As shown in Fig. 9, the pressure mechanism 102 includes a substantially U-shaped actuating member 106 that can swing around a pivot 104. The actuating member 106 is arranged such that one end 106a is coupled to the lever 100 and an opposite end 106b is placed lateral to the side wall of the container body 96.

In this structure, if a user pulls a lower part of the lever 100 outward relative to the water purifier 90, the actuating member 106 rotates around the pivot 104 in a direction of an arrow A. This makes the opposite end 106b of the actuating member 106 press the side wall of the container body 96 housing an additive. As a result, the internal pressure of the container body 96 is increased to discharge the additive in the container body 96 through the nozzle 96. Thus, the additive can be added easily into the purified water reservoir.

An additive supply port of the nozzle may be provided to a side wall of the nozzle. Even if the additive container is placed sideways, this structure still allows an additive to be added easily into the purified water reservoir.

The present invention is not limited to the aforementioned embodiments. Various changes or modifications can be devised within the range of a technical idea recited in claims.

### EXPLANATION OF REFERENCE NUMERALS

- 1:: Water purifier
- 2:: Internal space
- 4:: Opening
- 6:: Body container
- 8:: Lid
- 10:: Partition
- 12:: Raw water reservoir
- 14:: Water purification cartridge
- 16:: Purified water reservoir
- 18:: Check valve
- 19:: Baffle plate
- 19':: Baffle plate
- 20:: Umbrella valve
- 22:: Duck bill valve
- 28:: In-line mixer
- 42:: Hand-operated stirrer
- 44:: Bar member
- 46:: Stirring plate
- 48:: Opening
- 52:: Hand-operated rotary stirrer
- 54:: Rotary impeller
- 56:: Control lever
- 58:: Operational wire
- 62:: Rotary driving part
- 72:: Electrically-operated rotary stirrer
- 74:: Electrically-operated rotary impeller
- 76:: Switch
- 78:: Electric cable
- 80:: Power source
- 82:: Driving source

## Claims

1. A pot type water purifier, comprising:
a body container with internal space and an upper opening;
a raw water reservoir provided to an upper part of the internal space;
a water purification cartridge communicating with the raw water reservoir;
a purified water reservoir formed below the water purification cartridge, the purified water reservoir housing purified water resulting from filtration through the water purification cartridge;
a pouring lip for purified water in the purified water reservoir; and
stirring means provided to the body container to stir the purified water.

2. The water purifier according to claim 1, wherein the stirring means is provided between the purified water reservoir and the pouring lip.

3. The water purifier according to claim 2, wherein the stirring means is formed of an in-line mixer reduced in cross-sectional area from the purified water reservoir toward the pouring lip.

4. The water purifier according to claim 1, wherein the stirring means is provided in the purified water reservoir.

5. The water purifier according to claim 4, wherein the stirring means includes a rotary impeller.

6. The water purifier according to claim 4, wherein the stirring means includes a bar member and a stirring plate coupled to a lower end of the bar member.

7. The water purifier according to claim 6, wherein the bar member is arranged in a position in the purified water reservoir opposite the pouring lip.

8. The water purifier according to claim 6 or 7, comprising an anticollision member that prevents collision of the stirring plate with the water purification cartridge.

9. The water purifier according to any one of claims 1 to 8, comprising backflow reducing means provided below the water purification cartridge.

10. The water purifier according to claim 9, wherein the backflow reducing means includes a check valve.

11. The water purifier according to any one of claims 1 to 10, comprising liquid splash preventing means for a mixed liquid.

12. The water purifier according to claim 11, wherein the liquid splash preventing means for a mixed liquid includes a baffle plate.

13. The water purifier according to claim 11 or 12, wherein one baffle plate covers another baffle plate.

14. The water purifier according to any one of claims 1 to 13, comprising adding means including a cylindrical additive container and a nozzle provided to one end of the additive container and having an additive supply port, wherein the adding means adds an additive into the purified water reservoir.

15. The water purifier according to any one of claims 1 to 14, comprising a lid that closes the opening such that the opening can be opened and closed freely.
